# EUROPÄISCHE PATENTSCHRIFT

(11) **EP 3 715 626 B1**
(45) Veröffentlichungstag und Bekanntmachung des Hinweises auf die Patenterteilung: **17.11.2021**
(21) Anmeldenummer: 20164177.6
(22) Anmeldetag: 19.03.2020
(51) Int. Cl.: F03D 7/02, F03D 7/04, F03D 17/00

(54) **VERFAHREN ZUM ERMITTELN EINER LEISTUNGSKURVE EINER WINDENERGIEANLAGE UND ENTSPRECHENDE WINDENERGIEANLAGE**
METHOD FOR DETERMINING A POWER CURVE OF A WIND TURBINE AND CORRESPONDING WIND TURBINE
PROCÉDÉ DE DÉTERMINATION D'UNE COURBE DE PERFORMANCE D'UNE ÉOLIENNE ET ÉOLIENNE CORRESPONDANTE

(30) Priorität: 29.03.2019 DE 102019108244
(43) Veröffentlichungstag der Anmeldung: 30.09.2020
(73) Patentinhaber: Wobben Properties GmbH, 26607 Aurich (DE)
(72) Erfinder: Lebosq, Rodolphe, 26603 Aurich (DE); Peter, Dennis, 26723 Emden (DE)
(74) Vertreter: Eisenführ Speiser

(56) Entgegenhaltungen:
- EP-A1- 3 421 784
- EP-A2- 2 020 506
- DE-A1-102016 011 005
- US-A1- 2014 154 075
- US-A1- 2016 298 607
- US-A1- 2018 030 955
- US-A1- 2019 063 406

## Beschreibung

Die vorliegende Erfindung betrifft ein Verfahren zum Ermitteln einer Leistungskurve einer Windenergieanlage. Außerdem betrifft die vorliegende Erfindung eine solche Windenergieanlage und die vorliegende Erfindung betrifft auch eine Anordnung aus mehreren Windenergieanlagen, von denen wenigstens eine Windenergieanlage eine Leistungskurve erstellt.

Windenergieanlagen sind bekannt, sie wandeln die Energie im Wind in elektrische Leistung um. Die Leistung hängt dabei ganz wesentlich von der Windgeschwindigkeit ab. Ein Zusammenhang zwischen Windgeschwindigkeit und umgewandelter Leistung wird über eine Leistungskurve angegeben. Eine solche Leistungskurve kann üblicherweise graphisch so dargestellt werden, dass in einem kartesischen Koordinatensystem an der Abszisse die Windgeschwindigkeit und an der Ordinate die erzeugbare Leistung aufgetragen wird.

Eine solche Leistungskurve gibt die Leistungsfähigkeit der Windenergieanlage an und kann für die Steuerung der Windenergieanlage, aber auch die Bewertung der Windenergieanlage bzw. die Bewertung des Betriebs der Windenergieanlage verwendet werden. Zum Aufnehmen einer Leistungskurve ist somit die Windenergieanlage zu betreiben und die erzeugte Leistung zusammen mit der jeweils vorhandenen und somit zugehörigen Windgeschwindigkeit aufzunehmen. Wie das Erfassen einer solchen Leistungskurve durchgeführt werden soll, ist bspw. in dem internationalen Standard IEC 61400-12-1 angegeben.

Ein besonderes Problem bildet dabei die möglichst präzise Erfassung der Windgeschwindigkeit. Besonders ist ein sog. Gondelanemometer häufig nicht ausreichend, zumindest sehr ungenau, um eine solche Leistungskurve aufnehmen zu können. Zumindest gibt es Bereiche, die mittels eines solchen Gondelanemometers schwierig zu erfassen sind, insbesondere höhere Windgeschwindigkeiten, wenn noch Böen hinzukommen. Auch andere Messsensoren, wie bspw. ein Lidar sind nicht immer unproblematisch. Besonders kann die Messfähigkeit eines Lidars von der Reinheit der Luft abhängen, was auch Regen mit einbezieht, der aus messtechnischer Sicht wie eine Verschmutzung der Luft wirkt.

Aus diesem Grunde wird häufig vorgeschlagen, was auch in dem vorstehend internationalen Standard vorgeschlagen wird, einen entsprechend hochgenauen Messmast in einem vorbestimmten Abstand vor der Windenergieanlage aufzubauen, um die Leistungskurve aufnehmen zu können. Es ist zu beachten, dass eine Leistungskurve insbesondere zu Beginn des Betriebs der Windenergieanlage aufgenommen wird, so dass die Verwendung eines solchen Messmasts zweckmäßig ist, der ggf. nach Vermessung der Leistungskurve auch wieder abgebaut werden kann.

Problematisch bei einer solchen Messung mittels eines Messmasts ist, dass dieser nur dann die für die betreffende Windenergieanlage relevante Windgeschwindigkeit misst, wenn die Windrichtung genauso gerichtet ist, dass sie aus der Richtung des Messmasts auf die Windenergieanlage strömt, wenn also der Messmast genau in Luv der Windenergieanlage positioniert ist. Dreht sich die Windrichtung, wird die Messung verfälscht. Entsprechend kann eine lange Messdauer die Folge sein, demnach nämlich solange gemessen werden muss, bis ausreichend viele unterschiedliche Windgeschwindigkeiten für genau diese Windrichtung aufgetreten sind.

Das Deutsche Patent- und Markenamt hat in der Prioritätsanmeldung zur vorliegenden Anmeldung folgenden Stand der Technik recherchiert: DE 10 2016 011 005 A1, EP 3 421 784 A1, WO 2011/157 271 A2, Norm DIN EN 61400-12-1, VDE 0127-12-1 2017-12-00. Windenergieanlagen - Teil 12-1: Messung des Leistungsverhaltens von Windenergieanlagen (IEC 61400-12-1:2017); Deutsche Fassung EN 61400-12-1:2017. Deckblatt u. Inhaltsverzeichnis.

Das Europäische Patentamt hat zur vorliegenden Anmeldung folgenden Stand der Technik angeführt: US 2019/063406 A1; US 2014/154075 A1; US 2016/298607 A1; US 2016/298607 A1; US 2018/030955 A1. Die US 2019/063406 A1 betrifft die Überwachung und Beurteilung von Leistungsänderung an einer Windturbine und schlägt zu diesem Zweck ein Verfahren vor mit dem insbesondere festgestellt werden kann, ob die Leistung einer Windkraftanlage im Laufe der Zeit abnimmt, entweder allmählich oder abrupt. Die US 2014/154075 A1 betrifft die Verbesserung der Energieproduktion von Windenergieanlagen. Die US 2016/298607 A1 behandelt die Bewertung der Leistungsauswirkungen von Windturbinennachrüstungen. Die US 2018/030955 A1 bezieht sich darauf, Auswirkungen von extremen Windbedingungen auf eine Windenergieanlage zu reduzieren.

Die europäische Offenlegungsschrift EP 2 020 506 A2 betrifft ein Verfahren zum Ermitteln einer Regelungsreserve. Dort wird vorgeschlagen, mehreren Windenergieanlagen zum Betrieb einen Sollwert für wenigstens eine elektrische Größe vorzugeben. Weiterhin wird eine Leistungskurve verwendet, die abhängig von Werten des Windes einen Maximalwert der elektrischen Größe enthält. Dabei ist eine Steuereinheit vorgesehen, die über die Leistungskurve aus dem Wind einen Maximalwert der elektrischen Größe erfasst.

Der vorliegenden Erfindung liegt somit die Aufgabe zugrunde, wenigstens eines der vorgenannten Probleme zu adressieren. Insbesondere soll eine Lösung vorgeschlagen werden, die das Aufnehmen einer Leistungskurve für eine Windenergieanlage im Vergleich zu bisher bekannten Verfahren möglichst verbessert. Zumindest soll zu bisher bekannten Lösungen eine alternative Lösung vorgeschlagen werden.

Erfindungsgemäß wird ein Verfahren gemäß Anspruch 1 vorgeschlagen. Das Verfahren ist somit dazu vorgesehen, eine Leistungskurve einer ersten Windenergieanlage zu ermitteln. Das kann auch als ein Vermessen der Leistungskurve bezeichnet werden. Eine solche Windenergieanlage weist einen Rotor auf, wobei hier der aerodynamische Rotor gemeint ist. Ein solcher Rotor weist wiederum eines oder mehrere Rotorblätter auf, nämlich insbesondere drei Rotorblätter.

Das Verfahren betrifft somit eine Leistungskurve, die einen Zusammenhang zwischen Windgeschwindigkeit und mit der Windenergieanlage erzeugbaren Leistung angibt. Dabei betrifft das Verfahren das Ermitteln bzw. Vermessen der Leistungskurve einer ersten Windenergieanlage. Das Verfahren verwendet zudem eine weitere, nämlich zweite Windenergieanlage, dessen Bedeutung unten noch erläutert wird.

Es wird nun vorgeschlagen, dass zum Erfassen der Windgeschwindigkeit, die dann zum Ermitteln der Leistungskurve benötigt wird, die Windgeschwindigkeit über einen Messzusammenhang aus einem Verhalten des Rotors dieser ersten Windenergieanlage bestimmt wird. Der Rotor wird durch den Wind angetrieben und dreht sich somit. Der Rotor reagiert aber auch in anderer Art und Weise auf den auf ihn wirkenden Wind. Besonders biegen bzw. verformen sich die Rotorblätter elastisch in Abhängigkeit der Windgeschwindigkeit. Bei einer solchen elastischen Verformung kann sich das Blatt in mehrere Richtungen, besonders in alle Raumrichtungen verformen. Besonders kann sich dabei ein Teil des Blattes relativ zu einer Blattwurzel in alle Raumrichtungen bewegen, was zu der Verformung führt. Hier ist unter Biegen somit auch eine elastische Verformung in mehrere Richtungen umfasst, nicht nur eine Biegung in eine Richtung, die allerdings auch in Betracht kommt.

Eine solche elastische Biegung bzw. elastische Verformung der Rotorblätter, die statisch und/oder dynamisch sein kann, ist ein Verhalten des Rotors und daraus kann auf die Windgeschwindigkeit zurückgeschlossen werden. Es besteht nämlich ein Zusammenhang zwischen dem Rotorverhalten und der Windgeschwindigkeit und dieser Zusammenhang wird als Messzusammenhang bezeichnet. Es wird also vorgeschlagen, die Windgeschwindigkeit über diesen Messzusammenhang aus dem Verhalten des Rotors zu bestimmen.

Ein solcher Zusammenhang zwischen dem Rotorverhalten und der Windgeschwindigkeit ist allerdings komplex und nichtlinear. Der Messzusammenhang kann somit nicht ohne Weiteres vorbestimmt oder anderweitig bzw. in Simulationen angegeben werden. Zwar ist eine Vorberechnung oder Ermittlung in Simulationen grundsätzlich möglich, es darf dabei aber keine zu große Erwartung an die Genauigkeit gestellt werden. Das hängt besonders auch damit zusammen, dass bis heute Rotorblätter einer Windenergieanlage nicht ideal dem entworfenen Modell entsprechen müssen und dass das Verhalten eines komplexen und großen Rotorblattes, das heutzutage häufig eine Länge von über 50 Metern aufweist, bzw. entsprechenden Rotors, nicht in jeder Hinsicht vorausbestimmt werden kann. Es können auch weitere Effekte auftreten, wie Turmschatteneffekte, die schwierig zu erfassen sind. Hier wird nun vorgeschlagen, dass der Messzusammenhang mittels einer baugleichen zweiten Windenergieanlage angelernt wird. Der komplexe Messzusammenhang kann also durch dieses Anlernen ermittelt werden. Um diesen Messzusammenhang durch Anlernen zu ermitteln, wird aber vorgeschlagen, eine zweite baugleiche Windenergieanlage zu verwenden. Hier liegt besonders die Erkenntnis zugrunde, dass eine Windenergieanlage, deren Leistungskurve vermessen werden soll, nicht die Messeinrichtungen aufweist, die zum Anlernen des Messzusammenhangs benötigt werden. Auch kann der Aufstellungsort unterschiedlich gut zum Anlernen geeignet sein. Dabei wurde auch erkannt, dass der Messzusammenhang aber zwischen baugleichen Windenergieanlagen übertragen werden kann. Besonders wurde erkannt, dass unterschiedliche Topologien des jeweiligen Aufstellungsortes der Windenergieanlage keinen nennenswerten Einfluss auf den Messzusammenhang haben.

Zum Anlernen wird somit die zweite Windenergieanlage verwendet, die einen Referenzwindsensor aufweist. Da diese erste Windenergieanlage somit einen solchen Referenzwindsensor nicht benötigt, sondern nur die zweite Windenergieanlage, kann hier auch ein vergleichsweise teurer Referenzwindsensor verwendet werden.

Zum Anlernen wird dann vorgeschlagen, dass die zweite Windenergieanlage bei variierenden Windgeschwindigkeiten betrieben wird und der Referenzwindsensor wiederholt jeweils eine Windgeschwindigkeit aufnimmt und einem zeitgleich aufgenommenen Verhalten des Rotors der zweiten Windenergieanlage zuordnen, um den Messzusammenhang zu erstellen. Jede dieser Zuordnungen zwischen der Windgeschwindigkeit, die nämlich mit den Referenzwindsensor aufgenommen wurde, und dem aufgenommenen Verhalten des Rotors, bildet somit einen Teil des Messzusammenhangs. Durch wiederholtes Aufnehmen der Windgeschwindigkeit und des Verhaltens des Rotors bei variierenden Windgeschwindigkeiten können somit entsprechende Werte gesammelt werden, so dass sich dann der Messzusammenhang in seiner Gesamtheit ergibt.

Darauf aufbauend wird dann die Leistungskurve der ersten Windenergieanlage dadurch erstellt, dass während die erste Windenergieanlage bei variierenden Windgeschwindigkeiten betrieben wird, wiederholt jeweils zeitgleich eine erzeugte Leistung der ersten Windenergieanlage und eine zugehörige Windgeschwindigkeit aufgenommen werden. Dabei wird jedes Mal im Grunde ein Wertepaar erstellt, nämlich aus erzeugter Leistung und ermittelter zugehöriger Windgeschwindigkeit. Die hierbei nach und nach ermittelten Wertepaare können dann die Leistungskurve bilden.

Hierbei wird die Windgeschwindigkeit aus einem Verhalten des Rotors der ersten Windenergieanlage über den mittels der zweiten Windenergieanlage angelernten Messzusammenhang bestimmt.

Grundsätzlich ist anzumerken, dass die Windenergieanlagen, also sowohl die erste Windenergieanlage beim Ermitteln der Leistungskurve, also auch die zweite Windenergieanlage beim Anlernen des Messzusammenhangs jeweils mit einer, nämlich derselben, Drehzahl-Leistungskurve betrieben werden. Bei dieser Drehzahl-Leistungskurve wird jeweils eine Drehzahl erfasst und abhängig davon eine Leistung eingestellt, nämlich gemäß der Drehzahl-Leistungskurve. Entspricht dann diese eingestellte Leistung der Leistung, die die Windenergieanlage dem Wind entnimmt, ist ein stabiler Arbeitspunkt gefunden worden.

Gibt es aber noch Abweichungen, so führt das zu einer Erhöhung oder Verringerung der Drehzahl, was wiederum dazu führt, dass ein neuer Leistungswert eingestellt wird, bis ein stabiler Punkt gefunden wird, was üblicherweise nicht lange dauert. Entsprechend reagiert die Windenergieanlage auch auf Veränderungen der Windgeschwindigkeit, die nämlich zu einer Erhöhung der Drehzahl oder Verringerung der Drehzahl führt, was wiederum eine Anpassung der Leistung nach sich zieht. Diese Drehzahlleistungskurve wird somit bei beiden Windenergieanlagen verwendet und bestimmt den Betriebspunkt. Von dem Betriebspunkt kann auch das Verhalten des Rotors, insbesondere nämlich auch die Biegung des Rotorblattes bzw. der Rotorblätter abhängen. Das ist nämlich nicht zuletzt dadurch begründet, dass die an dem Rotor und damit den Rotorblättern angreifende Windkraft auch von der Drehzahl des Rotors abhängt.

Vorzugweise wird somit dieser Zusammenhang auch dem Messzusammenhang zugeordnet. Zumindest wird vorgeschlagen, dass diese Drehzahl-Leistungskurve beim Erstellen der Leistungskurve, also der Windgeschwindigkeits-Leistungskurve, einerseits und dem Anlernen des Messzusammenhangs andererseits zugrunde liegt.

Statt einer Drehzahl-Leistungskennlinie kann auch eine Drehzahl-Drehmomentkennlinie verwendet werden.

Gemäß einer Ausführungsform wird vorgeschlagen, dass die erste Windenergieanlage an einem anderen Aufstellungsort, insbesondere in einem anderen Windpark, als die zweite Windenergieanlage aufgestellt ist, und/oder dass die erste Windenergieanlage in einem anderen Gelände als die zweite Windenergieanlage aufgestellt ist, und/oder dass die zweite Windenergieanlage in einem Flachstandort aufgestellt ist und die erste Windenergieanlage nicht in einem Flachstandort aufgestellt ist.

Beide Windenergieanlagen stehen also nicht nebeneinander. Besonders können beide Windenergieanlagen weit entfernt voneinander aufgestellt sein. Vorzugsweise sind ihre Aufstellungsorte um 50km oder mehr voneinander entfernt. Und es kann auch vorgesehen sein, dass die beiden Windenergieanlagen in unterschiedlichen Windparks aufgestellt sind. Es wurde nämlich erkannt, dass sich diese Aufstellungsorte unterscheiden können und dennoch der Messzusammenhang an unterschiedlichen Aufstellungsorten aufgenommen werden kann und dennoch der Messzusammenhang eine gute Eignung für die Verwendung in der ersten Windenergieanlage bietet.

Besonders können die erste Windenergieanlage und die zweite Windenergieanlage auch in einem andere Gelände aufgestellt sein, also bspw. ein hügeliges Gelände einerseits und ein außerdem oder stattdessen bewaldetes Gelände andererseits. Auch hier wurde erkannt, dass trotzdem ein guter Messzusammenhang in dem einen Gelände angelernt werden kann, während er in dem anderen Gelände verwendet werden kann.

Besonders ist vorgesehen, dass die zweite Windenergieanlage in einem Flachstandort aufgestellt ist und die erste Windenergieanlage nicht in einem Flachstandort aufgestellt ist. Ein Flachstandort (Englisch "flat terrain") ist eine Fachbezeichnung, die in dem genannten internationalen Standard verwendet wird (s. oben IEC 61400-12-1). Das bezeichnet einen Standort, der nur geringe Variationen von einer Ebene aufweist und keine zu starken Steigungen aufweist.

Es wurde nämlich erkannt, dass an einem Flachstandort besonders gute Bedingungen herrschen, um den Messzusammenhang anzulernen. Besonders wenn die erste Windenergieanlage nicht in einem Flachstandort aufgestellt ist, kann dort der Messzusammenhang nur schlecht oder ggf. gar nicht angelernt werden. Daher wird vorgeschlagen, dass der Messzusammenhang an dem Flachstandort angelernt wird, also dass die zweite Windenergieanlage, mit der der Zusammenhang angelernt wird, in dem Flachstandort aufgestellt ist.

Gemäß einer Ausführungsform wird vorgeschlagen, dass zum Erstellen der Leistungskurve das Erfassen der Windgeschwindigkeit über den Messzusammenhang aus dem Verhalten des Rotors jeweils über einen ersten Erfassungszeitraum durchgeführt wird und dass zum Anlernen des Messzusammenhangs die Windgeschwindigkeit jeweils über einen zweiten Erfassungszeitraum aufgenommen wird, wobei der erste Erfassungszeitraum kleiner als der zweite Erfassungszeitraum ist.

Dabei wird innerhalb des jeweiligen Erfassungszeitraums, also sowohl des ersten als auch des zweiten Erfassungszeitraums, eine Mittelung oder ggf. andere Filterung der Windgeschwindigkeit vorgenommen. Daher wurde besonders erkannt, dass eine lange Mittelung zwar eine Schwankungsbreite der Windgeschwindigkeit reduziert, die Leistungskurve dadurch aber an Schärfe verliert. Besonders im Übergang vom Teillastbetrieb zu Volllastbetrieb weist eine Leistungskurve einen scharfen Übergang auf, der anschaulich auch als Knick bezeichnet werden kann. Dort führen nämlich geringe Windgeschwindigkeitsänderungen bereits zu starken Leistungsänderungen, was zu diesem scharfen Übergang der Leistungskurve führt. Durch eine starke Mittelung wird dieser scharfe Übergang dadurch abgerundet und weicht insoweit von der tatsächlichen, also ideal vermessenden Leistungskurve ab.

Somit wurde nun erkannt, dass das Problem dadurch gelöst werden kann, dass zum Anlernen große Erfassungszeiträume verwendet werden, der zweite Erfassungszeitraum also groß ist, bei der Anwendung, also beim Erstellen der Leistungskurve aber sehr geringe Erfassungszeiträume zweckmäßig sind, der zweite Erfassungszeitraum also klein ist. Besonders wurde erkannt, dass tatsächlich bei dem Bestimmen der Windgeschwindigkeit aus dem Verhalten des Rotors die Messzeit, also der erste Erfassungszeitraum, sehr kurz gewählt werden kann. Bei dieser Art der Bestimmung der Windgeschwindigkeit tritt vergleichsweise wenig Rauschen auf, so dass diese kurzen Messzeiten verwendet werden können. Damit kann dann die Leistungskurve sehr präzise und gerade im Übergang vom Teillastbetrieb zum Volllastbetrieb sehr knickscharf ermittelt bzw. ausgemessen werden.

Insbesondere ist der zweite Erfassungszeitraum wenigstens doppelt so groß wie der erste, insbesondere ist er wenigstens 10-Mal so groß wie der erste. Der zweite Erfassungszeitraum ist also signifikant, oder sogar um eine 10er Potenz größer als der erste.

Insbesondere ist der erste Erfassungszeitraum kleiner als 15 Sekunden, insbesondere kleiner als 10 Sekunden und besonders bevorzugt sogar kleiner 5 Sekunden. Also selbst mit einem Erfassungszeitraum von 5 Sekunden oder noch kleiner, insbesondere 4 Sekunden, ist noch eine gute Bestimmung der Windgeschwindigkeit aus dem Verhalten des Rotors möglich.

Vorzugsweise ist der zweite Erfassungszeitraum wenigstens 2 Minuten lang, insbesondere ist er wenigstens 8 Minuten lang und gemäß einer bevorzugten Variante beträgt er 10 Minuten. Besonders der Vergleich des ersten und zweiten Erfassungszeitraums hinsichtlich der genannten Werte zeigt, dass in Anbetracht, dass der erste Erfassungszeitraum kleiner als 5 Sekunden ist der zweite Erfassungszeitraum größer als 8 Minuten ist, in diesem Fall der zweite Erfassungszeitraum wenigstens 96 Mal so groß wie der erste Erfassungszeitraum ist, kann also 100 Mal so groß sein, oder noch größer.

Es wurde also besonders erkannt, dass für das Erstellen der Leistungskurve einerseits und das Anlernen des Messzusammenhangs andererseits signifikant unterschiedliche Erfassungszeiträume zu wählen sind.

Gemäß einer Ausführungsform wird vorgeschlagen, dass der Referenzwindsensor als wenigstens ein Messsensor an einer Gondel der zweiten Windenergieanlagen angeordnet ist. Hier wurde besonders erkannt, dass die Verwendung eines Messmasts entbehrlich sein kann. Besonders kann ein entsprechend genauer Sensor an bzw. in der zweiten Windenergieanlage installiert werden und solche Kosten sind nur einmalig, da jedenfalls für alle übrigen baugleichen Windenergieanlagen die Werte, nämlich besonders der ermittelte Messzusammenhang, übernommen werden können. Dabei bietet die Lösung, den Referenzwindsensor an der Gondel der Windenergieanlage zu installieren, den Vorteil, dass die Windgeschwindigkeit auch genau dort gemessen werden kann, wo sie auf die Windenergieanlage wirkt, nämlich im Bereich des Rotors.

Gemäß einer weiteren Ausgestaltung wird vorgeschlagen, dass der Referenzwindsensor als Lidar-Sensor ausgebildet ist. Dieser Lidar-Sensor kann der vorgeschlagene an der Gondel angeordnete Messsensor sein. Im Übrigen kommt auch in Betracht, dass, sei es für den Lidar-Sensor oder für andere Messsensoren, diese an mehreren Positionen angeordnet sind, also auch mehrere Einzelsensoren verwendet werden. Diese mehrere Positionen können bevorzugt an je einem Blatt sein, so dass dann bei einer Windenergieanlage mit drei Rotorblättern drei solche Einzelsensoren verwendet würden. Dadurch können Windgeschwindigkeitswerte an unterschiedlichen Positionen im Windfeld vor dem Rotor aufgenommen werden, um daraus die Windgeschwindigkeit als gesamte Windgeschwindigkeit abzuleiten.

Vorzugsweise ist der Lidar-Sensor an der Gondel angeordnet, was auch eine Anordnung am Spinner beinhaltet, dem drehenden Teil der Gondel, und erfasst Windgeschwindigkeitswerte in mehreren Entfernungen vor dem Rotor, z.B. in Abständen von 30, 60 und 90 Metern vor dem Rotor. Die Bezeichnung vor dem Rotor bezieht sich auf die Windrichtung und der Bereich vor dem Rotor ist somit der Bereich in Luv des Rotors.

Außerdem oder alternativ erfasst der Lidar-Sensor Windgeschwindigkeitswerte in mehreren Abständen zu einer Rotorachse. Dadurch kann auch berücksichtigt werden, dass der Wind im gesamten Bereich vor dem Rotor nicht homogen ist und sich in diesem Bereich vor dem Rotor, nämlich der Rotorfläche, positionsabhängige Abweichungen ergeben können. Das kann durch diese unterschiedlichen Abstände berücksichtigt werden.

Außerdem oder alternativ wird vorgeschlagen, dass der Lidar-Sensor in einem auf den Wind vor dem Rotor gerichteten Messkegel Windgeschwindigkeitswerte erfasst. Auch dadurch kann ein größerer Bereich abgetastet werden. Der Messkegel kann dadurch gebildet werden, dass der Lidar-Sensor eine Abstrahlrichtung aufweist und diese um eine Drehachse des Lidar-Sensor gekippt ist, bspw. um einen Bereich von 10°-20° , insbesondere um 15°. Durch diese Drehung beschreibt dann die Abstrahlrichtung einen Kegelmantel um die Drehachse als Mittelachse des Kegels.

Aus den erfassten Windgeschwindigkeitswerten kann dann eine Windgeschwindigkeit bestimmt werden. Das kann insbesondere so erfolgen, dass von all den erfassten Windgeschwindigkeitswerten ein Mittelwert gebildet wird. Es kommt aber auch eine andere Zusammenführung dieser Windgeschwindigkeitswerte zu einer Windgeschwindigkeit in Betracht, wie bspw. durch eine gewichtete Mittelwertbildung oder eine Filterung dieser Werte, wenn sie bspw. sukzessive in einen solchen Filter eingegeben werden.

Somit wird jeweils eine Windgeschwindigkeit aus vielen Windgeschwindigkeitswerten bestimmt. Besonders wird eine solche Windgeschwindigkeit über den zweiten Erfassungszeitraum aufgenommen. Zum Aufnehmen einer weiteren Windgeschwindigkeit, besonders wenn die Windgeschwindigkeit sich geändert hat, können dann wieder mehrere Windgeschwindigkeitswerte in dem zweiten Erfassungszeitraum aufgenommen werden. Hier kommt besonders in Betracht, dass sowohl in dem zweiten Erfassungszeitraum mehrere Windgeschwindigkeitswerte aufgenommen werden, als auch über die örtliche Variation mehrere Messwerte aufgenommen werden.

Gemäß einer Ausführungsform wird vorgeschlagen, dass als Verhalten des Rotors ein Verhalten wenigstens eines Rotorblattes aufgenommen wird. Es wird also das Verhalten des Rotorblattes aufgenommen und daraus die Windgeschwindigkeit über den mittels der zweiten Windenergieanlage angelernten Messzusammenhang bestimmt.

Besonders bevorzugt wird vorgeschlagen, dass als Verhalten des Rotors eine Biegung des Rotorblattes aufgenommen wird. Dabei wurde erkannt, dass sich das Rotorblatt abhängig der Windgeschwindigkeit biegt und somit die Biegung Rückschlüsse auf die Windgeschwindigkeit zulässt. Aus welcher Biegung welche Windgeschwindigkeit abgeleitet werden kann, gibt der Messzusammenhang an. Der Messzusammenhang wurde somit wie beschrieben angelernt.

Das Anlernen erfolgt also so, dass im Betrieb der zweiten Windenergieanlage der Wind zu einer Biegung des wenigstens einen Rotorblattes der zweiten Windenergieanlage führt. Diese Biegung hängt von der Windgeschwindigkeit ab und diese Windgeschwindigkeit wird gleichzeitig mit dem Referenzwindsensor aufgenommen. Diese mit dem Referenzwindsensor aufgenommene Windgeschwindigkeit kann dann der zeitgleich erfassten Biegung des Rotorblattes zugeordnet werden. Dadurch ergibt sich ein solches Zuordnungspaar. Das wird für viele unterschiedliche Windgeschwindigkeiten wiederholt, so dass möglichst viele Zuordnungspaare erstellt werden können. Über die vielen Zuordnungspaare ergibt sich dann ein Gesamtbild zwischen Biegung des Rotorblattes und Windgeschwindigkeit.

Für nicht erfasste Windgeschwindigkeiten, die also zwischen zwei erfassten Windgeschwindigkeiten jeweils liegen, oder sogar außerhalb des erfassten Bereichs, kommt eine Interpolation bzw. Extrapolation in Betracht. Es kommt auch in Betracht, dass aus den vielen Zuordnungspaaren ein funktionaler Zusammenhang bestimmt wird, z.B. in dem eine Polynomfunktion entsprechend parametriert wird, z.B. über ein Gauß-Verfahren. Das kann auch abschnittsweise erfolgen, wenn es bspw. nicht sinnvoll ist, eine geeignete Polynomfunktion für den gesamten Bereich vorzugeben. In jedem Fall wird so ein Messzusammenhang bestimmt und die beispielhaft genannte parametrierte Polynomfunktion könnte einen solchen Messzusammenhang oder einen Teil davon bilden.

Im einfachsten Fall wird bei der Betrachtung der Biegung des Rotorblattes eine Biegung an einer einzigen Stelle betrachtet, nämlich statisch. Es kommt aber auch in Betracht, an mehreren Stellen in demselben Rotorblatt zu verfassen und/oder in mehreren, insbesondere allen Rotorblättern, und daraus dann die Windgeschwindigkeit zu ermitteln. Entsprechend kann ein komplexerer Messzusammenhang erstellt werden, der mehrere Biegungen berücksichtigt. Ggf. kommt auch die Berücksichtigung dynamischer Biegewerte in Betracht. Außerdem oder alternativ können die jeweils zu einer Windgeschwindigkeit aufgenommenen Biegungen über einen mittelwertbildenden anderweitig zu einem gemeinsamen Wert zusammengeführt werden.

Erfindungsgemäß wird auch eine Windenergieanlage zum Ermitteln einer Leistungskurve vorgeschlagen, wobei
- die Windenergieanlage einen Rotor aufweist, und
- die Leistungskurve einen Zusammenhang zwischen Windgeschwindigkeit und mit der ersten Windenergieanlage erzeugbarer Leistung angibt, und die Windenergieanlage umfasst
- eine Windmessanordnung zum Erfassen der Windgeschwindigkeit über einen Messzusammenhang aus einem Verhalten des Rotors, wobei
- der Messzusammenhang einen Zusammenhang zwischen dem Rotorverhalten und der Windgeschwindigkeit angibt,
- eine Eingabeschnittstelle zum Eingeben des Messzusammenhangs, der mittels einer baugleichen zweiten Windenergieanlage angelernt und erstellt wurde,
- eine Steuereinrichtung, die dazu vorbereitet ist, dass die Leistungskurve der ersten Windenergieanlage dadurch erstellt wird, dass
- während die Windenergieanlage bei variierenden Windgeschwindigkeiten betrieben wird, wiederholt jeweils zeitgleich eine erzeugte Leistung der Windenergieanlage und eine zugehörige Windgeschwindigkeit aufgenommen wird, wobei
- die Windgeschwindigkeit aus einem Verhalten des Rotors der ersten Windenergieanlage über den mittels der zweiten Windenergieanlage angelernten Messzusammenhang bestimmt wird.

Die Windenergieanlage weist somit eine Windmessanordnung zum Erfassen der Windgeschwindigkeit über einen Messzusammenhang aus einem Verhalten des Rotors auf. Besonders ist die Messanordnung dazu vorbereitet, wenigstens eine Biegung eines Rotorblattes zu erfassen und daraus über den Messzusammenhang die Windgeschwindigkeit zu bestimmen.

Über eine Eingabeschnittstelle der Windenergieanlage kann die Windenergieanlage den Messzusammenhang erhalten, der mittels einer baugleichen zweiten Windenergieanlage angelernt und erstellt wurde. Die Eingabeschnittstelle kann eine kabelgebundene oder kabellose Kommunikationseinrichtung, insbesondere Empfangseinrichtung sein oder umfassen oder sie kann eine Vorrichtung zum Aufnehmen eines Datenträgers sein, um ein weiteres Beispiel zu nennen.

Mittels der Steuereinrichtung kann dann die Leistungskurve aufgenommen werden. Die Steuereinrichtung ist dazu mit der Eingabeschnittstelle und der Windmessanordnung entsprechend verbunden. Weiterhin kann eine Speichereinrichtung, insbesondere eine Datenspeichereinrichtung vorgesehen sein, in der der Messzusammenhang hinterlegt sein kann und/oder in der die aufgenommene Leistungskurve hinterlegt werden kann. Vorzugsweise ist diese Datenspeichereinrichtung Teil der Steuereinrichtung.

Vorzugsweise ist die Windenergieanlage, insbesondere die Steuereinrichtung, dazu vorbereitet, ein Verfahren zum Ermitteln einer Leistungskurve gemäß wenigstens einer vorstehend beschriebenen Ausführungsform auszuführen. Das Verfahren zum Ermitteln der Leistungskurve kann dazu in der Steuereinrichtung implementiert sein. Der Messzusammenhang wird dazu durch eine andere Windenergieanlage angelernt und über die Eingabeschnittstelle eingegeben. Darauf basierend wird die Leistungskurve ermittelt.

Erfindungsgemäß wird auch eine Windenergieanlagenanordnung vorgeschlagen, die wenigstens eine erste und eine zweite Windenergieanlage umfasst und wobei diese Windenergieanlagenanordnung zum Erfassen einer Leistungskurve der ersten Windenergieanlage verwendet wird, wobei
- die erste und die zweite Windenenergieanlage zueinander baugleich sind und jeweils einen Rotor mit wenigstens einem Rotorblatt aufweisen, wobei
- die Leistungskurve einen Zusammenhang zwischen Windgeschwindigkeit und mit der ersten Windenergieanlage erzeugbarer Leistung angibt,
- die erste Windenergieanlage eine erste Windmessanordnung zum Erfassen der Windgeschwindigkeit über einen Messzusammenhang aus einem Verhalten des Rotors aufweist, wobei
- der Messzusammenhang einen Zusammenhang zwischen dem Rotorverhalten und der Windgeschwindigkeit angibt, und
- der Messzusammenhang mittels einer baugleichen zweiten Windenergieanlage angelernt wird, wobei
- zum Anlernen die zweite Windenergieanlage einen Referenzwindsensor aufweist und
- die zweite Windenergieanlage eine Anlernsteuereinheit aufweist, die dazu vorbereitet ist, dass während die zweite Windenergieanlage bei variierenden Windgeschwindigkeiten betrieben wird, der Referenzwindsensor wiederholt jeweils eine Windgeschwindigkeit aufnimmt und einem zeitgleich mittels einer zweiten Windmessanordnung der zweiten Windenergieanlage aufgenommenen Verhalten des Rotors der zweiten Windenergieanlage zuordnet, um den Messzusammenhang zu erstellen, wobei
- die erste Windenergieanlage eine Eingabeschnittstelle aufweist, zum Eingeben des Messzusammenhangs, der mittels der baugleichen zweiten Windenergieanlage angelernt und erstellt wurde, und
- die erste Windenergieanlage eine Steuereinrichtung aufweist, die dazu vorbereitet ist, dass die Leistungskurve der ersten Windenergieanlage dadurch erstellt wird, dass
- während die erste Windenergieanlage bei variierenden Windgeschwindigkeiten betrieben wird, wiederholt jeweils zeitgleich eine erzeugte Leistung der ersten Windenergieanlage und eine zugehörige Windgeschwindigkeit aufgenommen wird, wobei
- die Windgeschwindigkeit aus einem Verhalten des Rotors der ersten Windenergieanlage über den mittels der zweiten Windenergieanlage angelernten Messzusammenhang bestimmt wird.

Sowohl die erste Windenergieanlage als auch die zweite Windenergieanlage weisen eine Windmessanordnung auf, nämlich eine erste bzw. zweite, die aber baugleich sind, zumindest das gleiche Rotorverhalten bzw. das gleiche Biegeverhalten jeweils wenigstens eines Rotorblatts aufnehmen. Die erste Windenergieanlage weist zudem eine Steuereinrichtung auf, die die Windenergieanlage steuert und auch die Leistungskurve letztendlich erstellt. Die Steuereinrichtung wirkt mit der Windmessanordnung zusammen und außerdem ist eine Eingabeschnittstelle für die erste Windenergieanlage vorgesehen, über die sie den Messzusammenhang erhalten kann, der mittels der zweiten Windenergieanlage angelernt wurde.

Die zweite Windenergieanlage weist dazu eine Anlernsteuereinheit auf, die die Windenergieanlage entsprechend steuert und auch die Zuordnung vornimmt zwischen der Windgeschwindigkeit, die mit dem Referenzsensor aufgenommen wurde, der Teil der zweiten Windenergieanlage ist, und dem Rotorverhalten, das mit der zweiten Windmessanordnung aufgenommen wurde. So erstellt die zweite Windenergieanlage also den Messzusammenhang und der kann über die Eingabeschnittstelle in die erste Windenergieanlage eingegeben werden.

Vorzugsweise ist die Windenergieanlagenanordnung dazu vorbereitet, ein Verfahren gemäß einem der vorstehend beschriebenen Ausführungsformen auszuführen. Besonders kann dieses Verfahren in der Steuereinrichtung und der Anlernsteuereinheit implementiert seien, in dem nämlich jeweils die entsprechende Teile implementiert sind.

Nachfolgend wird die Erfindung beispielhaft anhand von Ausführungsformen unter Bezugnahme auf die begleitenden Figuren näher erläutert.
- Figur 1: zeigt eine Windenergieanlage in einer perspektivischen Darstellung.
- Figur 2: zeigt eine Windenergieanlagenanordnung in einer schematischen Darstellung.

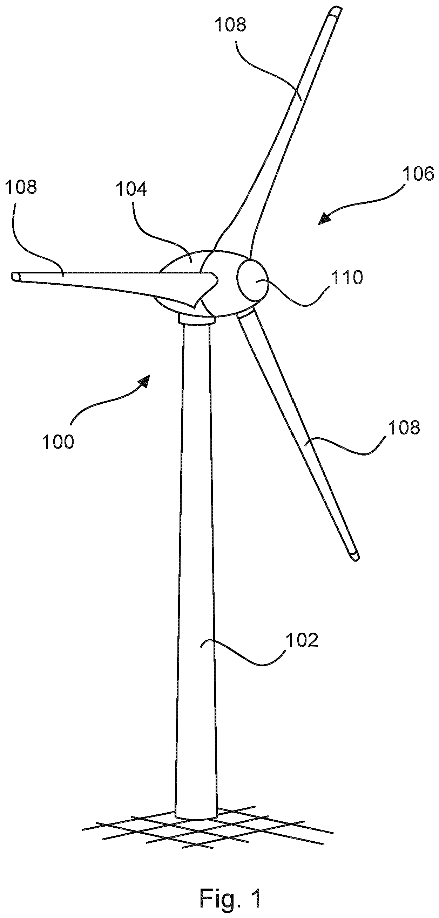

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

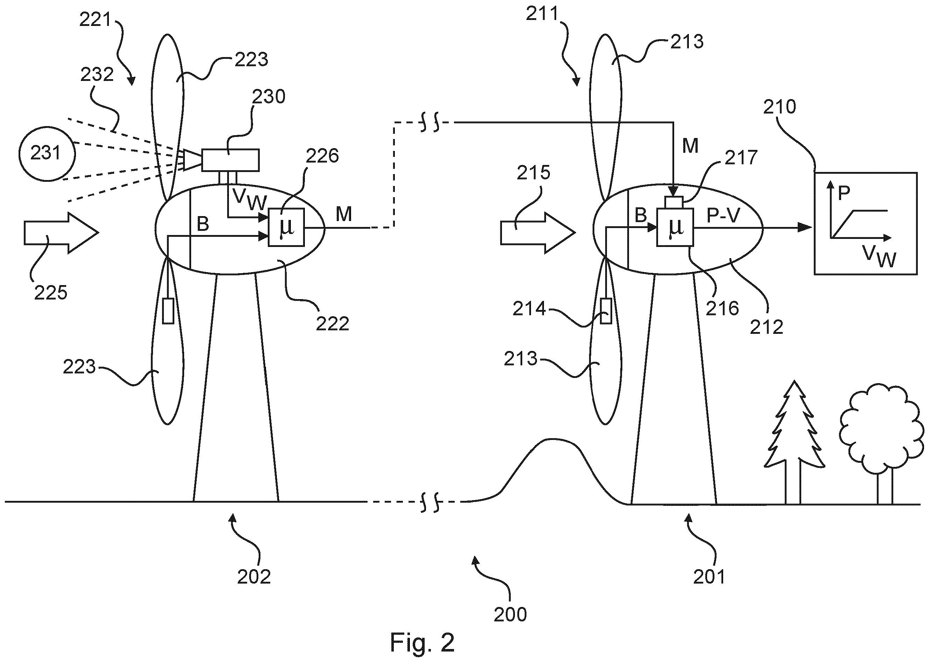

Figur 2 zeigt eine Windenergieanlagenanordnung 200 mit einer ersten Windenergieanlage 201 und einer zweiten Windenergieanlagen 202. Beide Windenergieanlagen weisen einen Rotor 211 bzw. 221 auf, sowie eine Gondel 212 bzw. 222. Beide Rotoren 211 bzw. 221 weisen mehrere Rotorblätter 213 bzw. 223 auf, von denen die Figur 2 jeweils in der schematischen Darstellung nur zwei zeigt.

Die Windenergieanlagenanordnung 200 der Figur 2 dient auch zum Erläutern des Verfahrens zum Ermitteln einer Leistungskurve. Eine solche Leistungskurve gibt einen Zusammenhang zwischen erzeugbarer Leistung P und dafür ursächlicher Windgeschwindigkeit Vw. Nur schematisch ist eine solche Leistungskurve 210 dargestellt.

Die schematisch dargestellte Leistungskurve 210 gehört zur ersten Windenergieanlage 201. Die erste Windenergieanlage 201 ist in einem eher komplizierten Terrain, nämlich nicht in einem Flachstandort aufgestellt. Das ist durch den angedeuteten Hügel die angedeuteten Bäume veranschaulicht.

Die zweite Windenergieanlage 202 ist in einem Flachstandort aufgestellt und das wird dadurch veranschaulicht, dass diese zweite Windenergieanlage 202 im Wesentlichen auf einen ebenen Untergrund aufgestellt ist.

Zum Erstellen der Leistungskurve 210 wird mittels einer ersten Windmessanordnung 214 eine Windgeschwindigkeit des ersten Windes 215 aus einem Verhalten des Rotors 211, nämlich besonders aus einer Biegung wenigstens eines der Rotorblätter 213 bestimmt. Eine solche elastische Biegung kann mehrdimensional, also in mehrere Richtungen auftreten, und kann als elastische Verformung bezeichnet werden. Dazu wird die erste Windenergieanlage 201 betrieben und das kann über die Steuereinrichtung 216 gesteuert werden. In diesem Betrieb wird eine Biegung B des Rotorblattes 213 aufgenommen und zur weiteren Verarbeitung in die Steuereinrichtung 216 eingegeben. Die Steuereinrichtung 216 benötigt zum Umrechnung der Biegung B in eine Windgeschwindigkeit Vw einen Messzusammenhang M. Dieser Messzusammenhang M wird über eine Eingabeschnittstelle 217 in die Steuereinrichtung 216 und damit in die erste Windenergieanlage eingegeben.

Die Steuereinrichtung 216 kann dann aus der erfassten Biegung B und mit dem Messzusammenhang M eine Windgeschwindigkeit bestimmen. Gleichzeitig kann die Steuereinrichtung 216 ein in dem Moment erzeugte Leistung P aufnehmen. Daraus kann ein Wertepaar, nämlich ein Zuordnungspaar P-V erstellt werden, das im Grunde einen Punkt der Leistungskurve 210 bildet.

Mit sich verändernder Windgeschwindigkeit wird diese Messung mehrfach wiederholt, um jedes Mal ein solches Zuordnungspaar P-V zu erhalten und daraus eine Leistungskurve zu bilden, nämlich besonders die Leistungskurve 210.

Um den Messzusammenhang M zu erhalten, wird dieser mittels der zweiten Windenergieanlage 202 ermittelt, nämlich angelernt.

Die zweite Windenergieanlage 202 steht nicht nur gemäß Figur 2 in unterschiedlichem Gelände, sondern sie ist auch weit von der ersten Windenergieanlage 201 aufgestellt. Nur aus Gründen der graphischen Darstellung sind diese beiden Windenergieanlagen 201 und 202 in einer Figur nebeneinander dargestellt. Tatsächlich können sie aber weit auseinander stehen, z.B. 50km oder 100km, oder auch 500km.

Zum Ermitteln des Messzusammenhangs M ist zunächst eine Voraussetzung, dass die erste und zweite Windenergieanlage 201 und 202 baugleich sind. Das schließt natürlich nicht aus, dass es minimal Abweichungen gibt. Die Windenergieanlagen sind aber insoweit baugleich, als dass sie im Wesentlichen dasselbe Verhalten aufweisen. Wenigstens in einem Punkt sind sie nicht identisch, weil nämlich für die zweite Windenergieanlage 202 ein Referenzwindsensor 230 vorgesehen ist. Dieser Referenzsensor 230 kann als Lidar ausgebildet sein und ist auf der Gondel 222 angeordnet. Die Größe des Referenzsensors 230 ist nicht maßstabsgetreu zur Gondel 222. Viele übrige Elemente sind auch nicht maßstabsgetreu, der Referenzsensor ist dabei aber besonders groß gezeichnet.

Jedenfalls misst der Referenzsensor 230 in einem Rotorbereich 231 vor dem Rotor 221. Gemäß Figur 2 kommt nämlich auch der zweite Wind 225 gemäß der Darstellung von links und damit ist dieser Rotorbereich 231 in Luv der zweiten Windenergieanlagen 202.

Für den Referenzwindsensor 230 ist durch einige angedeutete Messstrahlen 232 veranschaulicht, dass er in dem Rotorbereich 230 misst. Die Messstrahlen 232 sind in unterschiedliche Richtungen und unterschiedlich lang dargestellt. Sie können somit in unterschiedlichen Abständen zum Rotor 221 messen und auch in vertikaler Richtung ihre Bereiche erfassen. In horizontaler Richtung können sie das auch, was zeichnerisch allerdings nicht dargestellt ist. Besonders können die Messstrahlen 232 einen Kegelmantel aufspannen.

Somit wird mit diesem Referenzwindsensor 230 eine Windgeschwindigkeit Vw erfasst. Zeitglich wird mit einer zweiten Windmessanordnung 224 ein Verhalten des Rotors 221 bestimmt, nämlich eine Biegung B des zweiten Rotorblatts 223. Die erfasste Windgeschwindigkeit Vw und die erfasste Biegung B werden in eine Anlernsteuereinheit 226 eingegeben. Diese Anlernsteuereinheit 226, oder eine andere Steuereinrichtung, kann auch die zweite Windenergieanlage 202 steuern, insbesondere basierend auf einer Drehzahl-Leistungskennlinie.

Die Anlernsteuereinheit 226 ordnet dann die erfasste Windgeschwindigkeit Vw und die zeitgleich erfasste Biegung B zu einem einzelnen Zusammenhangspaar zusammen. Das wird dann für verschiedene Windgeschwindigkeiten wiederholt, wobei jedes Mal ein Zusammenhangspaar entsteht und diese können schließlich in dem Messzusammenhang M zusammengefasst werden. Es kommt auch in Betracht, dass diese gesammelten Zusammenhangspaare nicht nur gesammelt, sondern bspw. auch in eine Zusammenhangskurve überführt werden, bspw. durch entsprechende Mittelung oder Filterung, oder durch Vorgabe einer entsprechend zu parametrisierenden Polynomfunktion.

Jedenfalls ist das Ergebnis der Messzusammenhang M und der wird dann von der zweiten Windenergieanlage 202 ausgegeben und an die erste Windenergieanlage 201 übergeben und dort über die Eingabeschnittstelle 217 in die erste Windenergieanlage 201 eingegeben, insbesondere dort in die Steuereinrichtung 216.

Der so ermittelte und dann von der ersten Windenergieanlage erhaltene Messzusammenhang M ermöglicht dann sukzessive über die erfasste Biegung B die Windgeschwindigkeit zu ermitteln und einer zeitgleich aufgenommenen Leistung zu zuordnen, um die Leistungskurve 210 zu erstellen.

## Patentansprüche

1. Verfahren zum Ermitteln einer Leistungskurve einer ersten, einen Rotor aufweisenden Windenergieanlage, wobei
- die Leistungskurve (210) einen Zusammenhang zwischen Windgeschwindigkeit (Vw) und mit der ersten Windenergieanlage (201) erzeugbarer Leistung angibt,
- zum Erfassen der Windgeschwindigkeit (Vw) die Windgeschwindigkeit über einen Messzusammenhang (M) aus einem Verhalten des Rotors bestimmt, wobei
- der Messzusammenhang (M) einen Zusammenhang zwischen dem Rotorverhalten und der Windgeschwindigkeit (Vw) angibt, und
- der Messzusammenhang (M) mittels einer baugleichen zweiten Windenergieanlage (202) angelernt wird, wobei
- zum Anlernen die zweite Windenergieanlage (202) einen Referenzwindsensor (230) aufweist und
- während die zweite Windenergieanlage (202) bei variierenden Windgeschwindigkeiten betrieben wird, der Referenzwindsensor (230) wiederholt jeweils eine Windgeschwindigkeit (Vw) aufnimmt und einem zeitgleich aufgenommenen Verhalten des Rotors der zweiten Windenergieanlage (202) zuordnet, um den Messzusammenhang (M) zu erstellen, wobei
- die Leistungskurve (210) der ersten Windenergieanlage (201) dadurch erstellt wird, dass
- während die erste Windenergieanlage (201) bei variierenden Windgeschwindigkeiten betrieben wird, wiederholt jeweils zeitgleich eine erzeugte Leistung der ersten Windenergieanlage (201) und eine zugehörige Windgeschwindigkeit (Vw) aufgenommen wird, wobei
- die Windgeschwindigkeit (Vw) aus einem Verhalten des Rotors (211) der ersten Windenergieanlage (201) über den mittels der zweiten Windenergieanlage (202) angelernten Messzusammenhang (M) bestimmt wird.

2. Verfahren nach Anspruch 1,
**dadurch gekennzeichnet, dass**
- die erste Windenergieanlage (201) an einem anderen Aufstellungsort, insbesondere in einem anderen Windpark, als die zweite Windenergieanlage (202) aufgestellt ist, und/oder dass
- die erste Windenergieanlage (201) in einem anderen Gelände als die zweite Windenergieanlage (202) aufgestellt ist, und/oder dass
- die zweite Windenergieanlage (202) in einem Flachstandort aufgestellt ist und die erste Windenergieanlage (201) nicht in einem Flachstandort aufgestellt ist.

3. Verfahren nach Anspruch 1 oder 2,
**dadurch gekennzeichnet, dass**
- zum Erstellen der Leistungskurve (210) das Erfassen der Windgeschwindigkeit (Vw) über den Messzusammenhang (M) aus dem Verhalten des Rotors (221) jeweils über einen ersten Erfassungszeitraum durchgeführt wird und
- zum Anlernen des Messzusammenhangs die Windgeschwindigkeit (Vw) jeweils über einen zweiten Erfassungszeitraum aufgenommen wird, wobei
- der erste Erfassungszeitraum kleiner als der zweite Erfassungszeitraum ist, und insbesondere
- der zweite Erfassungszeitraum wenigstens doppelt so groß ist wie der erste, insbesondere wenigstens zehnmal so groß ist, und/oder
- der erste Erfassungszeitraum kleiner als 15 Sekunden ist, insbesondere kleiner als 10 Sekunden ist, und bevorzugt kleiner als 5 Sekunden ist, und/oder
- der zweite Erfassungszeitraum wenigstens 2 Minuten, insbesondere wenigstens 8 Minuten beträgt.

4. Verfahren nach einem der vorstehenden Ansprüche,
**dadurch gekennzeichnet, dass**
der Referenzwindsensor (230) als wenigstens ein Messsensor an einer Gondel (222) der zweiten Windenergieanlage (202) angeordnet ist.

5. Verfahren nach einem der vorstehenden Ansprüche,
**dadurch gekennzeichnet, dass**
- der Referenzwindsensor als Lidar-Sensor ausgebildet ist und dass insbesondere
- der Lidar-Sensor an einer bzw. der Gondel (222) angeordnet ist und
- Windgeschwindigkeitswerte in mehreren Entfernungen vor dem Rotor erfasst,
- Windgeschwindigkeitswerte in mehreren Abständen zu einer Rotorachse erfasst und/oder
- in einem auf den Wind vor dem Rotor gerichteten Messkegel Windgeschwindigkeitswerte erfasst, und
- aus den erfassten Windgeschwindigkeitswerten eine Windgeschwindigkeit (Vw) bestimmt wird, insbesondere durch Mittelwertbildung.

6. Verfahren nach einem der vorstehenden Ansprüche,
**dadurch gekennzeichnet, dass**
- als Verhalten des Rotors (221) ein Verhalten wenigstens eines Rotorblattes (223) aufgenommen wird, insbesondere dass
- als Verhalten des Rotors (221) wenigstens eine Biegung (B) bzw. elastische Verformung des Rotorblattes aufgenommen wird.

7. Windenergieanlage zum Ermitteln einer Leistungskurve (210), wobei
- die Windenergieanlage einen Rotor aufweist, und
- die Leistungskurve (210) einen Zusammenhang zwischen Windgeschwindigkeit (Vw) und mit der ersten Windenergieanlage (201) erzeugbarer Leistung (P) angibt, und die Windenergieanlage umfasst
- eine Windmessanordnung (214) zum Erfassen der Windgeschwindigkeit (Vw) über einen Messzusammenhang (M) aus einem Verhalten des Rotors (221), wobei
- der Messzusammenhang (M) einen Zusammenhang zwischen dem Rotorverhalten und der Windgeschwindigkeit angibt,
- eine Eingabeschnittstelle (217) zum Eingeben des Messzusammenhangs (M), der mittels einer baugleichen zweiten Windenergieanlage (202) angelernt und erstellt wurde,
- eine Steuereinrichtung (216), die dazu vorbereitet ist, dass die Leistungskurve (210 der ersten Windenergieanlage (201) dadurch erstellt wird, dass
- während die Windenergieanlage bei variierenden Windgeschwindigkeiten betrieben wird, wiederholt jeweils zeitgleich eine erzeugte Leistung der Windenergieanlage und eine zugehörige Windgeschwindigkeit aufgenommen wird, wobei
- die Windgeschwindigkeit (Vw) aus einem Verhalten des Rotors (221) der ersten Windenergieanlage (201) über den mittels der zweiten Windenergieanlage (202) angelernten Messzusammenhang bestimmt wird.

8. Windenergieanlage nach Anspruch 7,
**dadurch gekennzeichnet, dass**
die Windenergieanlage, insbesondere die Steuereinrichtung (216), dazu vorbereitet ist, ein Verfahren zum Ermitteln einer Leistungskurve (210) nach einem der Ansprüche 1 bis 6 auszuführen.

9. Windenergieanlagenanordnung mit wenigstens einer ersten und einer zweiten Windenergieanlage zum Erfassen einer Leistungskurve (210) der ersten Windenergieanlage, wobei
- die erste und die zweite Windenenergieanlage (201, 202) zueinander baugleich sind und jeweils einen Rotor mit wenigstens einem Rotorblatt aufweisen, wobei
- die Leistungskurve (210) einen Zusammenhang zwischen Windgeschwindigkeit und mit der ersten Windenergieanlage erzeugbarer Leistung (P) angibt,
- die erste Windenergieanlage (201) eine erste Windmessanordnung (224) zum Erfassen der Windgeschwindigkeit über einen Messzusammenhang (M) aus einem Verhalten des Rotors aufweist, wobei
- der Messzusammenhang (M) einen Zusammenhang zwischen dem Rotorverhalten und der Windgeschwindigkeit angibt, und
- der Messzusammenhang mittels einer baugleichen zweiten Windenergieanlage angelernt wird, wobei
- zum Anlernen die zweite Windenergieanlage (202) einen Referenzwindsensor (230) aufweist und
- die zweite Windenergieanlage (202) eine Anlernsteuereinheit (226) aufweist, die dazu vorbereitet ist, dass während die zweite Windenergieanlage (202) bei variierenden Windgeschwindigkeiten betrieben wird, der Referenzwindsensor wiederholt jeweils eine Windgeschwindigkeit aufnimmt und einem zeitgleich mittels einer zweiten Windmessanordnung (224) der zweiten Windenergieanlage aufgenommenen Verhalten des Rotors der zweiten Windenergieanlage zuordnet, um den Messzusammenhang zu erstellen, wobei
- die erste Windenergieanlage (201) eine Eingabeschnittstelle (217) aufweist, zum Eingeben des Messzusammenhangs, der mittels der baugleichen zweiten Windenergieanlage (202) angelernt und erstellt wurde, und
- die erste Windenergieanlage (201) eine Steuereinrichtung (216) aufweist, die dazu vorbereitet ist, dass die Leistungskurve (210) der ersten Windenergieanlage dadurch erstellt wird, dass
- während die erste Windenergieanlage (201) bei variierenden Windgeschwindigkeiten betrieben wird, wiederholt jeweils zeitgleich eine erzeugte Leistung (P) der ersten Windenergieanlage und eine zugehörige Windgeschwindigkeit aufgenommen wird, wobei
- die Windgeschwindigkeit aus einem Verhalten des Rotors (221) der ersten Windenergieanlage über den mittels der zweiten Windenergieanlage angelernten Messzusammenhang bestimmt wird.

10. Windenergieanlagenanordnung nach Anspruch 9, dazu vorbereitet, ein Verfahren nach einem der Ansprüche 1 bis 6 auszuführen.

## Claims

1. A method of determining a power curve of a first wind turbine having a rotor, wherein
- the power curve (210) specifies a relationship between wind speed (Vw) and a power output that can be generated by the first wind turbine (201),
- in order to measure the wind speed (Vw), the wind speed is calculated on the basis of a measurement correlation (M) derived from a behavior of the rotor, wherein
- the measurement correlation (M) specifies a correlation between the rotor behavior and the wind speed (Vw), and
- the measurement correlation (M) is trained by means of a second wind turbine (202) of identical construction, wherein
- the second wind turbine (202) has a reference wind sensor (230) for training purposes and
- while the second wind turbine (202) is being operated at varying wind speeds, the reference wind sensor (230) repeatedly records a wind speed (Vw) and assigns it to a simultaneously recorded behavior of the rotor of the second wind turbine (202), in order to produce the measurement correlation (M), wherein
- the power curve (210) of the first wind turbine (201) is produced by
- repeatedly and simultaneously recording a power output generated by the first wind turbine (201) and an associated wind speed (Vw) while operating the first wind turbine (201) at varying wind speeds,
- the wind speed (Vw) being calculated from a behavior of the rotor (211) of the first wind turbine (201) on the basis of the measurement correlation (M) trained by means of the second wind turbine (202).

2. The method according to claim 1,
**characterized in that**
- the first wind turbine (201) is installed on a different installation site, in particular on a different wind farm, from the second wind turbine (202), and/or that
- the first wind turbine (201) is installed in different terrain from the second wind turbine (202), and/or that
- the second wind turbine (202) is installed on flat terrain and the first wind turbine (201) is not installed on flat terrain.

3. The method according to claim 1 or 2,
**characterized in that**
- in order to produce the power curve (210), measurement of the wind speed (Vw) on the basis of the measurement correlation (M) derived from the behavior of the rotor (221) is carried out over a first measurement period in each case and,
- in order to train the measurement correlation, the wind speed (Vw) is recorded over a second measurement period, wherein
- the first measurement period is shorter than the second measurement period, and in particular
- the second measurement period is at least twice as long as the first, in particular at least ten times as long, and/or
- the first measurement period is less than 15 seconds, in particular less than ten seconds, and preferably less than five seconds, and/or
- the second measurement period is at least two minutes, in particular at least eight minutes.

4. The method according to any one of the preceding claims,
**characterized in that**
the reference wind sensor (230) is arranged as at least one measuring sensor on a nacelle (222) of the second wind turbine (202).

5. The method according to any one of the preceding claims,
**characterized in that**
- the reference wind sensor is provided in the form of a lidar sensor and in particular that
- the lidar sensor is arrange on a or the nacelle (222) and
- measures wind speed values at a plurality of distances in front of the rotor,
- measures wind speed values at a plurality of distances from a rotor axis and/or
- measures wind speed values in a measurement cone directed at the wind in front of the rotor, and
- calculates a wind speed (Vw) from the measured wind speed values, in particular by averaging.

6. The method according to any one of the preceding claims,
**characterized in that**
- a behavior of at least one rotor blade (223) is recorded as a behavior of the rotor (221), in particular **in that**
- at least one bending (B) or elastic deformation of the rotor blade is recorded as the behavior of the rotor (221).

7. A wind turbine for determining a power curve (210), wherein
- the wind turbine has a rotor, and
- the power curve (210) specifies a correlation between the wind speed (Vw) and the power output (P) that can be generated by the first wind turbine (201), and said wind turbine includes
- a wind measurement unit (214) for measuring the wind speed (Vw) on the basis of a measurement correlation (M) derived from a behavior of the rotor (221), wherein
- the measurement correlation (M) specifies a correlation between the rotor behavior and the wind speed,
- an input interface (217) for inputting the measurement correlation (M) that was trained and produced by means of a second wind turbine (202) of identical construction,
- a controller (216) configured so that the power curve (210) of the first wind turbine (201) is produced by
- repeatedly and simultaneously recording a power output generated by the wind turbine and an associated wind speed while operating the wind turbine at varying wind speeds,
- the wind speed (Vw) being calculated from a behavior of the rotor (221) of the first wind turbine (201) on the basis of the measurement correlation trained by means of the second wind turbine (202).

8. The wind turbine according to claim 7,
**characterized in that**
the wind turbine, in particular the controller (216), is configured to perform a method of determining a power curve (210) according to any one of claims 1 to 6.

9. A wind turbine arrangement comprising at least one first and second wind turbine for measuring a power curve (210) of the first wind turbine, wherein
- the first and the second wind turbine (201, 202) are identical in construction and each have a rotor having at least one rotor blade, wherein
- the power curve (210) specifies a correlation between the wind speed and the power output (P) that can be generated by the first wind turbine,
- the first wind turbine (201) has a first wind measurement unit (224) for measuring the wind speed on the basis of the measurement correlation (M) derived from a behavior of the rotor, wherein
- the measurement correlation (M) specifies a correlation between the rotor behavior and the wind speed, and
- the measurement correlation is trained by means of a second wind turbine of identical construction, wherein
- the second wind turbine (202) has a reference wind sensor (230) for training purposes and
- the second wind turbine (202) has a self-training controller (226) which is configured so that, while the second wind turbine (202) is being operated at varying wind speeds, the reference wind sensor repeatedly records a wind speed and assigns it to a behavior of the rotor of the second wind turbine simultaneously recorded by means of a second wind measurement unit (224) of the second wind turbine, in order to produce the measurement correlation, wherein
- the first wind turbine (201) has an input interface (217) for inputting the measurement correlation that was trained and produced by means of the second wind turbine (202) of identical construction, and
- the first wind turbine (201) has a controller (216) configured so that the power curve (210) of the first wind turbine is produced by
- repeatedly and simultaneously recording a power output (P) generated by the first wind turbine (201) and an associated wind speed while operating the first wind turbine (201) at varying wind speeds,
- the wind speed being calculated from a behavior of the rotor (221) of the first wind turbine on the basis of the measurement correlation trained by means of the second wind turbine.

10. The wind turbine arrangement according to claim 9, configured to perform a method according to any one of claims 1 to 6.

## Revendications

1. Procédé de détermination d'une courbe de puissance d'une première éolienne présentant un rotor, dans lequel
- la courbe de puissance (210) indique un lien entre la vitesse du vent (Vw) et la puissance pouvant être générée avec la première éolienne (201),
- définit, pour détecter la vitesse du vent (Vw), à partir d'un comportement du rotor la vitesse du vent par l'intermédiaire d'un lien de mesure (M),
dans lequel
- le lien de mesure (M) indique un lien entre le comportement de rotor et la vitesse du vent (Vw), et
- le lien de mesure (M) est appris au moyen d'une deuxième éolienne (202) de structure identique, dans lequel
- pour l'apprentissage, la deuxième éolienne (202) présente un capteur de vent de référence (230), et
- alors que la deuxième éolienne (202) fonctionne à des vitesses du vent qui varient, le capteur de vent de référence (230) enregistre de manière répétée respectivement une vitesse du vent (Vw) et l'associe à un comportement enregistré simultanément du rotor de la deuxième éolienne (202) afin de créer le lien de mesure (M), dans lequel
- la courbe de puissance (210) de la première éolienne (201) est créée en ce que
- alors que la première éolienne (201) fonctionne à des vitesses de vent qui varient, une puissance générée de la première éolienne (201) et une vitesse du vent (Vw) associée sont enregistrées de manière répétée respectivement simultanément, dans lequel
- la vitesse du vent (Vw) est définie à partir d'un comportement du rotor (211) de la première éolienne (201) par l'intermédiaire du lien de mesure (M) appris au moyen de la deuxième éolienne (202).

2. Procédé selon la revendication 1,
**caractérisé en ce que**
- la première éolienne (201) est montée sur un autre emplacement de montage, en particulier dans un parc éolien autre que la deuxième éolienne (202), et/ou que
- la première éolienne (201) est montée sur un terrain autre que la deuxième éolienne (202), et/ou que
- la deuxième éolienne (202) est montée sur un site plat et la première éolienne (201) n'est pas montée sur un site plat.

3. Procédé selon la revendication 1 ou 2,
**caractérisé en ce que**
- pour créer la courbe de puissance (210), la détection de la vitesse du vent (Vw) est réalisée par l'intermédiaire du lien de mesure (M) à partir du comportement du rotor (221) respectivement sur un premier laps de temps de détection, et
- pour apprendre le lien de mesure, la vitesse du vent (Vw) est enregistrée respectivement sur un deuxième laps de temps de détection, dans lequel
- le premier laps de temps de détection est inférieur au deuxième laps de temps de détection, et en particulier
- le deuxième laps de temps de détection est au moins deux fois plus important que le premier, en particulier au moins dix fois plus grand, et/ou
- le premier laps de temps de détection est inférieur à 15 secondes, en particulier est inférieur à 10 secondes, et de manière préférée est inférieur à 5 secondes, et/ou
- le deuxième laps de temps de détection est d'au moins 2 minutes, en particulier d'au moins 8 minutes.

4. Procédé selon l'une quelconque des revendications précédentes,
**caractérisé en ce que**
le capteur de vent de référence (230) est disposé en tant qu'au moins un capteur de mesure sur une nacelle (222) de la deuxième éolienne (202).

5. Procédé selon l'une quelconque des revendications précédentes,
**caractérisé en ce que**
- le capteur de vent de référence est réalisé en tant qu'un capteur Lidar et qu'en particulier
- le capteur Lidar est disposé sur une ou la nacelle (222), et
- détecte des valeurs de vitesse du vent à plusieurs distances d'éloignement devant le rotor,
- - détecte des valeurs de vitesse du vent à plusieurs distances par rapport à un axe de rotor, et/ou
- - détecte des valeurs de vitesse du vent dans un cône de mesure dirigé vers le vent devant le rotor, et
- - une vitesse du vent (Vw) est définie à partir des valeurs de vitesse du vent détectées, en particulier par l'obtention d'une valeur moyenne.

6. Procédé selon l'une quelconque des revendications précédentes,
**caractérisé en ce que**
- un comportement d'au moins une pale de rotor (223) est enregistré en tant que comportement du rotor (221), en particulier que
- au moins une flexion (B) ou une déformation élastique de la pale de rotor sont enregistrées en tant que comportement du rotor (221).

7. Eolienne pour déterminer une courbe de puissance (210), dans laquelle
- l'éolienne présente un rotor, et
- la courbe de puissance (210) indique un lien entre la vitesse du vent (Vw) et la puissance (P) pouvant être générée avec la première éolienne (201), et l'éolienne comprend
- un ensemble de mesure du vent (214) pour détecter la vitesse du vent (Vw) par l'intermédiaire d'un lien de mesure (M) à partir d'un comportement du rotor (221), dans lequel
- le lien de mesure (M) indique un lien entre le comportement de rotor et la vitesse du vent,
- une interface de saisie (217) pour saisir le lien de mesure (M), qui a été appris et créé au moyen d'une deuxième éolienne (202) de structure identique,
- un dispositif de commande (216), qui est préparé pour que la courbe de puissance (210) de la première éolienne (201) soit créée en ce que
- alors que l'éolienne fonctionne à des vitesses du vent qui varient, une puissance générée de l'éolienne et une vitesse du vent associée sont enregistrées de manière répétée respectivement simultanément, dans lequel
- la vitesse du vent (Vw) est définie à partir d'un comportement du rotor (221) de la première éolienne (201) par l'intermédiaire du lien de mesure appris au moyen de la deuxième éolienne (202).

8. Eolienne selon la revendication 7,
**caractérisée en ce que**
l'éolienne, en particulier le dispositif de commande (216), est préparée pour exécuter un procédé pour déterminer une courbe de puissance (210) selon l'une quelconque des revendications 1 à 6.

9. Ensemble formant éolienne avec au moins une première et une deuxième éolienne pour détecter une courbe de puissance (210) de la première éolienne, dans lequel
- la première et la deuxième éolienne (201, 202) présentent une structure identique et présentent respectivement un rotor avec au moins une pale de rotor, dans lequel
- la courbe de puissance (210) indique un lien entre la vitesse du vent et une puissance (P) pouvant être générée avec la première éolienne,
- la première éolienne (201) présente un premier ensemble de mesure de vent (224) pour détecter la vitesse du vent par l'intermédiaire d'un lien de mesure (M) à partir d'un comportement du rotor, dans lequel
- le lien de mesure (M) indique un lien entre le comportement de rotor et la vitesse du vent, et
- le lien de mesure est appris au moyen d'une deuxième éolienne de structure similaire, dans lequel
- pour l'apprentissage, la deuxième éolienne (202) présente un capteur de vent de référence (230), et
- la deuxième éolienne (202) présente une unité de commande d'apprentissage (226), qui est préparée pour que, alors que la deuxième éolienne (202) fonctionne à des vitesses du vent variables, le capteur de vent de référence enregistre de manière répétée respectivement une vitesse du vent et l'associe à un comportement, enregistré de manière simultanée au moyen d'un deuxième ensemble de mesure de vent (224) de la deuxième éolienne, du rotor de la deuxième éolienne pour créer le lien de mesure, dans lequel
- la première éolienne (201) présente une interface de saisie (217) pour saisir le lien de mesure, qui été appris et créé au moyen de la deuxième éolienne (202) de structure similaire, et
- la première éolienne (201) présente un dispositif de commande (216), qui est préparé pour que la courbe de puissance (210) de la première éolienne soit créée en ce que
- alors que la première éolienne (201) fonctionne à des vitesses du vent variables, une puissance (P) générée de la première éolienne et une vitesse du vent associée sont enregistrées de manière répétée respectivement simultanément, dans lequel
- la vitesse du vent est définie à partir d'un comportement du rotor (221) de la première éolienne par l'intermédiaire du lien de mesure appris au moyen de la deuxième éolienne.

10. Ensemble formant éolienne selon la revendication 9 préparé pour exécuter un procédé selon l'une quelconque des revendications 1 à 6.
